# EUROPEAN PATENT APPLICATION

(11) **EP 4 714 863 A1**
(43) Date of publication of application: **25.03.2026**
(21) Application number: 24201188.0
(22) Date of filing: 18.09.2024
(51) Int. Cl.: B65G 1/04, B65G 21/12

(54) **A CONVEYOR SYSTEM**

(71) Applicant: AutoStore Technology AS, 5578 Nedre Vats (NO)
(72) Inventor: Håland, Christian, 5578 Nedre Vats (NO)
(74) Representative: Kilburn & Strode LLP

(57) **Abstract**

The disclosure relates to a conveyor system for a port in an automated storage and retrieval system, the conveyor system comprising a rail; a cart moveable along the rail between a first position and a second position, and configured to convey a storage container; a slider slidably mounted on the cart, and configured to move a storage container relative to the cart; and a gearing set configured such that as the cart is moved along the rail, the slider is moved on the cart by the gearing set.

## Description

### TECHNICAL FIELD

The disclosure relates to a conveyor system. More particularly, it relates to a conveyor system for a port in an automated storage and retrieval system comprising a storage grid configured to store one or more containers therein.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Ports contain conveyor system which convey storage containers from a first position (e.g., within a port) to a second position, such as a picking and packing location. Such conveyor systems may comprise conveyor belts for receiving storage containers, for example, or moveable carts which receive and move the containers. Such arrangements may be quite complex and therefore difficult to maintain, however.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a conveyor system according to an embodiment;
Fig. 6 shows a perspective view of the cart and the slider shown in the embodiment of Fig. 5; and
Figs. 7a-7f are schematic drawings of a conveyor system according to another embodiment.

### DETAILED DESCRIPTION

In overview, the disclosure relates to a conveyor system for a port in an automated storage and retrieval system. The conveyor system comprises a rail; a cart moveable along the rail between a first position and a second position, and configured to convey a storage container (which may be referred to herein as a bin); a slider slidably mounted on the cart, and configured to move a storage container relative to the cart; and a gearing set configured such that as the cart is moved along the rail by the actuator system, the slider is moved on the cart by the gearing set. The disclosure thereby provides a conveyor system for a port which is less complex than known arrangements, but still allows for quick and efficient operation to allow access to the contents of a storage container and introduce or remove storage containers from the automated storage and retrieval system.

### Automated storage and retrieval system overview

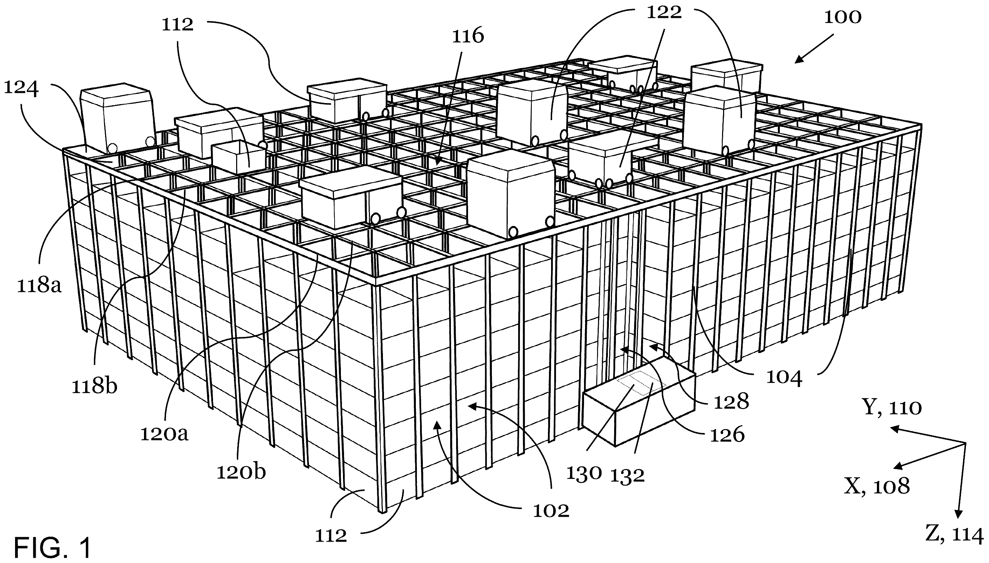

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

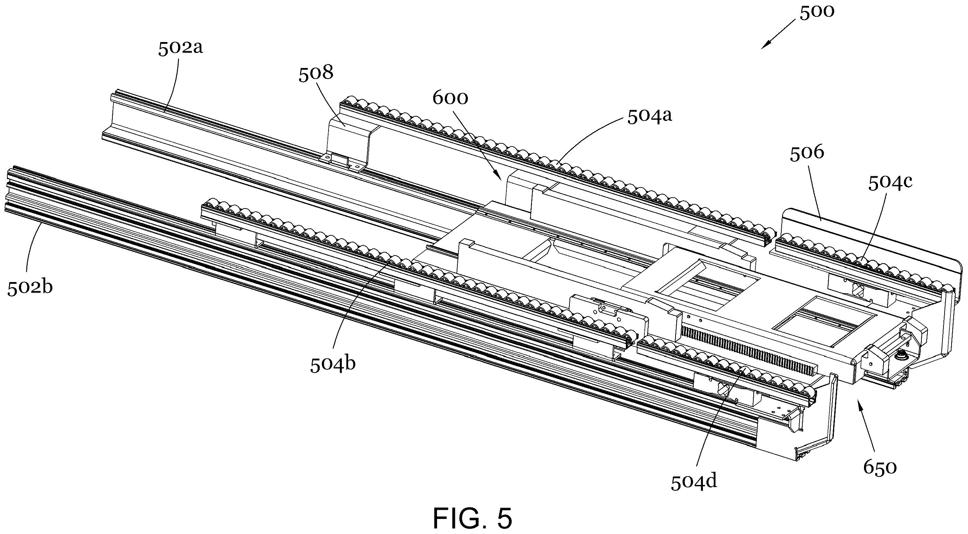

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. For example, the conveyor may comprise a conveyor system as described below with respect to Figs. 5-7. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

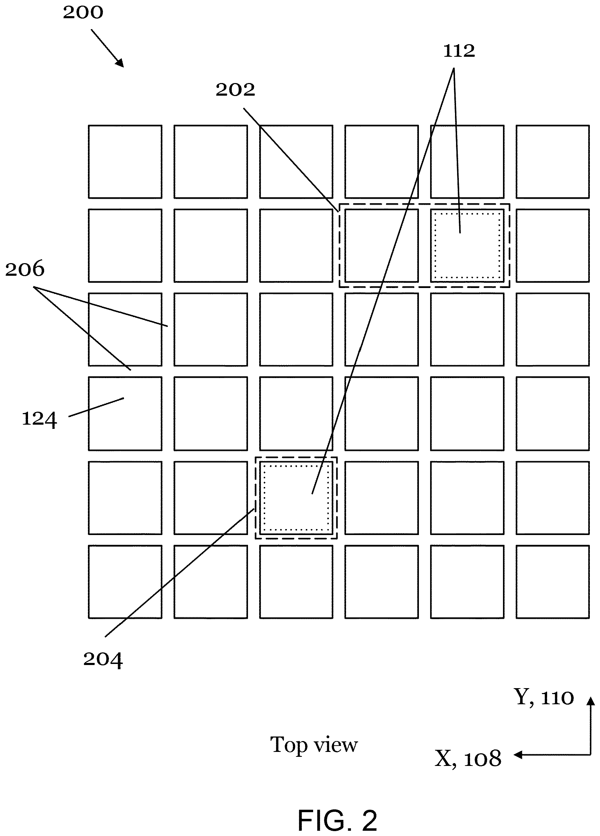

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

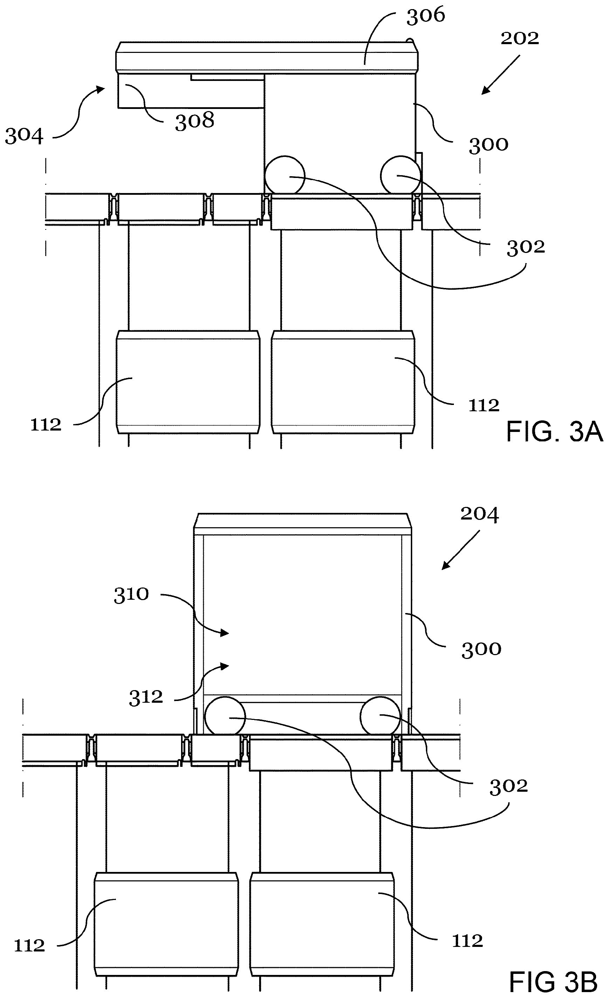

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

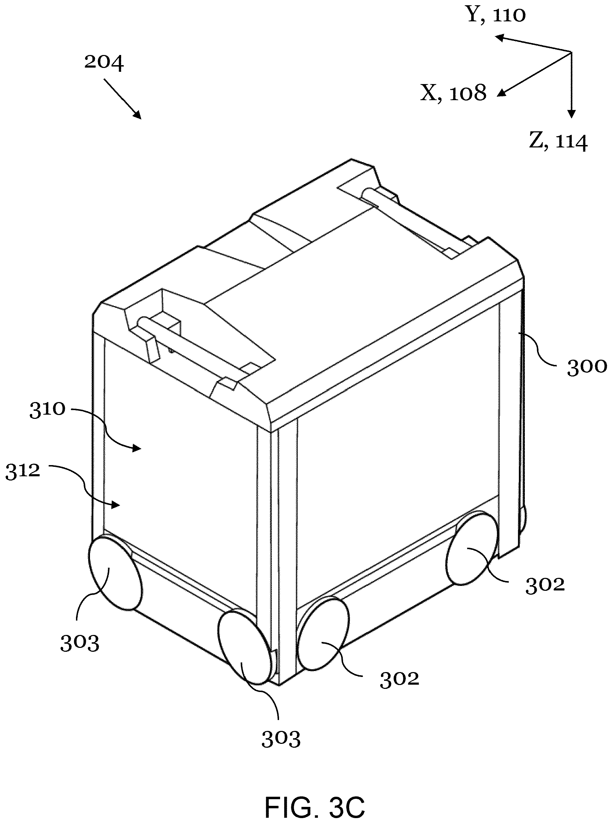

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

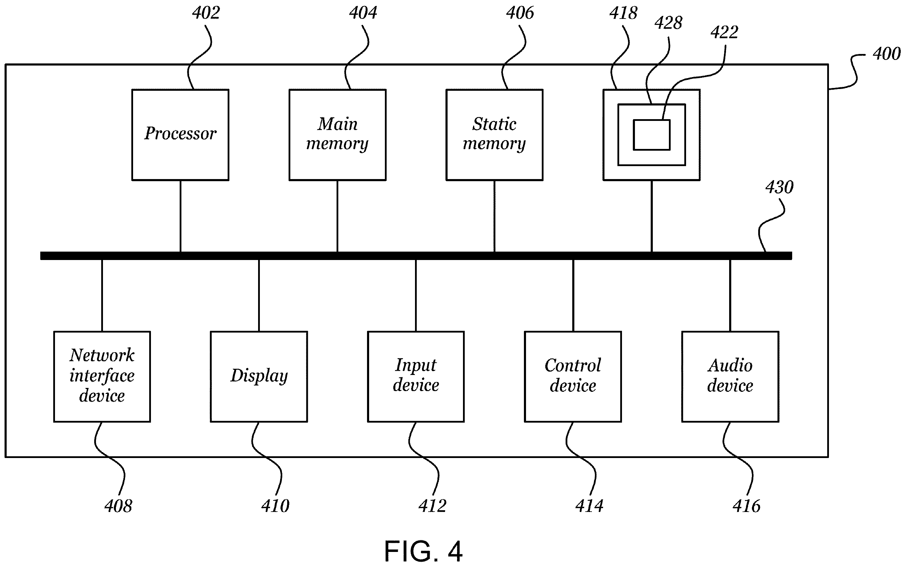

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Conveyor System

In certain examples of an automated storage and retrieval system, ports (e.g., ports 130, 132) allowing access to storage containers may be located at a distance from a port column (e.g., port columns 126, 128) of the grid. In order to convey storage containers between a port and the bottom of a port column, a conveyor system is therefore required. The conveyor system may also provide a 'buffer' for holding a storage container while it is not currently being accessed for picking or packing, and is not being moved vertically within the port column.

Fig. 5 shows a perspective view of a conveyor system 500 according to an embodiment of the present invention, and which is suitable for a port in an automated storage and retrieval system. In particular, the conveyor system 500 may convey storage containers from a port column (where storage containers are lifted by robots to be added to or removed from the grid) to a port (where storage containers can be picked and/or packed, for example by warehouse workers).

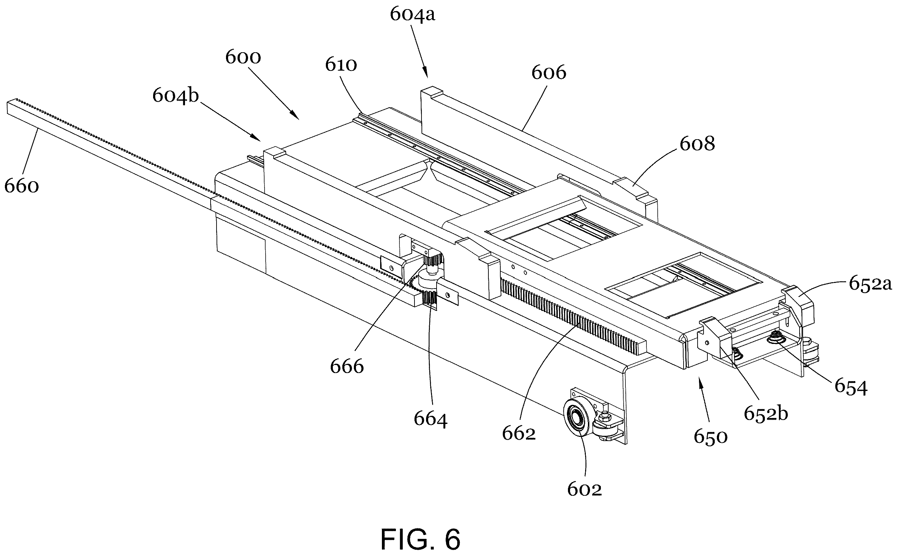

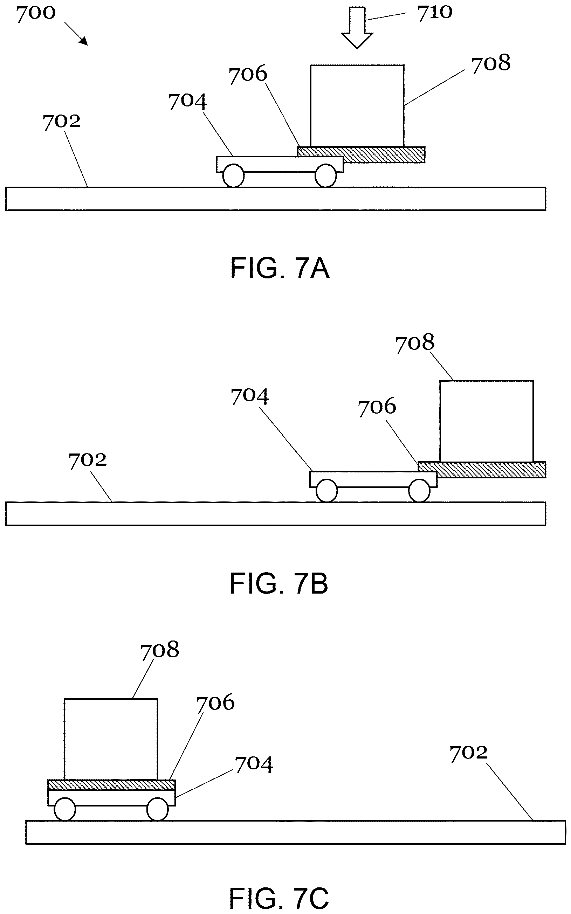

The conveyor system 500 comprises a pair of rails 502a, 502b, along which a cart 600 (described below in more detail with respect to Fig. 6) is moveable to convey a storage container. For example, the cart 600 may be moveable from a first position towards a first, or front, end of the rails 502a, 502b (e.g., as shown in Fig. 5) to a second position towards a second, or rear, end of the rails 502a, 502b, such that movement of the cart 600 conveys a storage container along the conveyor system 500. Movement of a cart in a conveyor system, such as the conveyor system 500, is described in more detail below with respect to Figs. 7A-7F. An actuator system, such as a motorised pulley system, is provided for moving the cart 600 along the rails 502a, 502b. For example, the actuator system may be connected to an underside of the cart 600, and may be operated by a controller (e.g., a processing system 400). Of course, it will be appreciated that in other examples only a single rail may be present, or additional rails may be present.

A slider 650 is slidably mounted on the cart 600, and is configured to move a storage container relative to the cart 600 in a manner described in more detail below. In use, each of the cart 600 and the slider 650 may accommodate a respective storage container, such that the conveyor system 500 can, at times, hold or retain two storage containers and so provide a buffer zone for holding a storage container when it is not being picked or packed, and is not being moved by a robot. Of course, it will be appreciated that, in other examples, the conveyor system 500 may be adapted to accommodate any suitable number of storage containers. In particular, in the position shown in Fig. 5 the cart 600 is in the first position wherein the cart 600 and the slider 650 are arranged to retain two storage containers. As will be explained in more detail below, when the cart 600 is in the second position at the rear of the conveyor system 500, the cart 600 and the slider 650 are arranged to retain a single storage container.

A gearing set (see Fig. 6) is connected between a rail 502b and the slider 650, and is configured such that as the cart is moved along the rails 502a, 502b (e.g., by the actuator system), the slider 650 is moved on the cart 600 by the gearing set. The slider 650 thereby moves relative to the cart 600 as the cart 600 moves relative to the rails 502a, 502b.

The conveyor system 500 further comprises a roller track alongside each rail, each roller track being formed of two sections. The conveyor system 500 therefore comprises four roller track sections 504a, 504b, 504c, 504d in total. The roller tracks support storage containers as they are transferred along the conveyor system 500 (that is, as the storage containers are moved by the cart 600 and/or the slider 610). Two roller track sections 504c, 504d comprise weigh stations which are configured to weigh a storage container which is supported thereon. This may be useful for tracking items added to or removed from the storage container, for example. For example, the weigh station may comprise a scales arrangement mounted between a roller track section and a rail. In particular, the roller track sections 504c, 504d comprising the weight stations maybe positioned at a port of the storage and retrieval system (e.g., port 130, 132 as described above).

A side barrier 506 is provided alongside a roller track section 504c, which constrains the position of a storage container in a direction perpendicular to (in particular, laterally to) the length of the rails 502a, 502b, ensuring that the storage container does not fall sideways off of the roller track section 504c. Although not shown in Fig. 5, it will be appreciated that such side barriers may be provided along substantially the entire length of the conveyor system 500, and in some examples along both sides of the conveyor system 500 (e.g., alongside all four roller track sections 504a, 504b, 504c, 504d).

The roller track sections 504a, 504b, 504c, 504d and the side barrier 506 are secured to the tracks 502a, 502b by supporting brackets (e.g., such as bracket 508).

Fig. 6 shows a perspective view of the cart 600 and the slider 650 of the conveyor system 500 described above with respect to Fig. 5. The gearing set is also shown.

The cart 600 comprises a generally cuboidal body which is moveable along rails 502a, 502b of the conveyor system 500 as described above. On each side of the cuboidal body, the cart 600 comprises a wheel arrangement 602 for interfacing with a rail, allowing the cart 600 to move along the rail.

Affixed to an upper side of the cart 600 are two retaining members 604a, 604b which are configured to engage a storage container in order to move the storage container along the conveyor system 500 as the cart 600 moves along the rails 502a, 502b. Each retaining member 604a, 604b comprises a respective recessed portion 606 into which the storage container is received, such that the storage container is received between end faces of the recessed portion 606. In this way, when the cart 600 moves along the rails 502a, 502b, the storage container is pushed along the roller tracks by the retaining members 604a, 60₄b. Each retaining member 604a, 604b also comprises a ramped rim 608, over which a storage container can be slide to be received into the recessed portion 606. In particular, the storage container may be slid over the ramped rim 608 when it is pushed by the slider 650 when the conveyor system 500 is in use, as described in more detail below.

The upper side of the cart 600 also comprises at least one guide rail 610, upon which the slider 650 is slidably mounted. The guide rail 610 comprises an elongate ridge, and a corresponding bearing block (not shown) affixed to the slider 650 is slidable along the guide rail 610. It will be appreciated that any suitable number of guide rails 610 may be provided in examples of the invention.

The slider 650 comprises a generally cuboidal body which is slidably mounted on the cart 600 (in particular, the slider 650 is slidably mounted to the cart 600 via the guide rail 610).

The slider 650 is configured to move a storage container relative to the cart 600 by comprising a pair of container engagement members 652a, 652b, which act as engagement means for pushing a storage container as the slider 650 is moved. In use, the weight of the storage container is supported by the roller tracks of the conveyor system 500, and the slider 650 pushes the storage container along the roller tracks. The container engagement members 652a, 652b are moveable between a raised position (as shown in Fig. 6) for engaging a side of a storage container, and a lowered position. A biasing means is provided in the form of a spring 654 and is arranged to urge the engagement members 652a, 652b towards the raised position. The spring 654 is configured such that the weight of a storage container placed on the engagement members 652a, 52b is sufficient to depress the engagement members 652a, 652b to their lowered position. Of course, it will be appreciated that any suitable biasing means, and any suitable number of container engagement members 652a, 652b may be provided in examples of the invention.

A gearing set is connected between a rail (in particular, rail 502b) of the conveyor system 500 and the slider 650, and is configured such that as the cart 600 is moved along the rail (e.g., by an actuator system), the slider 650 is moved on the cart 600 by the gearing set. In this way, as the cart 600 is moved along the rails 502a, 502b, the slider 650 is also moved relative to the rails 502a, 502b along the conveyor system 500 in order to move a storage container.

The gearing set comprises a first linear gear 660 which is mounted to the rail 502b, a second linear gear 662 which is mounted to the slider 650, a cart gear 664 which meshes with the first linear gear 660, and a slider gear 666 which meshes with the second linear gear 662. The slider gear 666 and the cart gear 664 are mounted to the cart 600 on a shared axle, such that the cart gear 664 and the slider gear 666 rotate together. Of course, it will be appreciated that any suitable gearing set may be provided. For example, a first linear gear may be mounted separately from the rail, or in another example, the gearing set may be connected between a wheel of the cart 600 and the slider 650 such that the slider 650 moves in reaction to rotation of the wheel.

By providing the gearing set, as the cart 600 moves along the rail 502b the cart gear 664 is caused to rotate by passing along the first linear gear 660 (as in a rack and pinion arrangement). Rotation of the cart gear 664 provides corresponding rotation of the slider gear 666 due to the shared axle, and so the second linear gear 662 is moved (again, as in a rack and pinion arrangement), causing the slider 650 to move relative to the cart 600. The gearing set thereby provides relative movement between the cart 600 and the slider 650 without requiring a separate or additional actuator mechanism for the slider 650. As only one actuator mechanism is required (for moving the cart 600), the conveyor system 500 is simplified but still allows for quick and efficient movement of storage containers as described below.

The cart gear 664 and the slider gear 666 have different diameters such that as the cart is moved along the rail 502b by a first distance, the slider 650 is moved on the cart 600 by a second distance. In particular, the slider gear 666 is smaller than the cart gear 664 such that the first distance is greater than the second distance. In examples, the diameters of the cart gear 664 and the slider gear 666 may be selected so as to provide any suitable predetermined ratio of movement of the slider 650 relative to the cart 600 to movement of the cart 600 along the rail 502b. However, in the embodiment shown in Fig. 6, the ratio is chosen such that when the cart 600 is in a first position (as seen in Figs. 5 and 6, towards a first end of the rails 502a, 502b) the cart 600 and the slider 650 are arranged to provide space for retaining two containers (i.e., a first container received within the recesses 606 of the retaining members 604a, 604b, and a second container received between the retaining members 604a, 604b and the container engagement members 652a, 652b), and when the cart 600 is in a second position (towards a second end of the rails 502a, 502b) the cart 600 and the slider 650 provide space for retaining a single container (received within the recesses 606 of the retaining members 604a, 604b, and wherein the cart 650 is located substantially entirely between the supporting members 604a, 604b). That is, when the cart 600 is moved from the first position to the second position, the slider 650 moves relative to the cart 600 by an amount which is generally equal to the length of a storage container, and in doing so pushes a storage container into the recess 606 of the retaining members 604a, 604b.

A method of operation of a conveyor system 700 according to an embodiment will be described with reference to Figs. 7A-7F, which show a series of schematic drawings of the conveyor system 700. It will be appreciated that the conveyor system 700 may be a conveyor system 500 as described above with respect to Figs. 5 and 6, for example.

The conveyor system 700 comprises a rail 702, a cart 704 which is moveable along the rail, and a slider 706 which is slidably mounted on the cart 704. These may be configured generally as described above with respect to Figs. 5 and 6, for example. A gearing set is provided to move the slider 706 relative to the cart 704 as the cart 704 moves along the rail 702.

In a first step of operation, as shown in Fig. 7A, the cart 704 and the slider 706 are positioned at a position along the rail 702 such that the slider 706 is located at the bottom of a port column of an automated storage and retrieval system (e.g., one of port columns 126, 128 as described above). This position is suitable for receiving a container 708 which is deposited onto the slider 706 as indicated by arrow 710. For example, the container 708 may be lowered onto the slider 706 by a robot (such as robot 122, for example). Although the container 708 is depicted in Fig. 7A as being supported by the slider 706, it will be appreciated that the weight of the container 708 may be supported by roller tracks as described above, for example, and the slider 706 engages the container 708 for movement as described below (similar consideration applies to description of the cart 704 below). In certain examples, the weight of the storage container 708 may depress an engagement means of the slider 706 (e.g., the engagement means 652a, 652b described above).

After the container 708 has been received by the conveyor system 700, the cart 704 moves forward along the rail 702 to the position shown in Fig. 7B, which is at a front of the conveyor system 700. In this position the container 708 is at a picking and packing location (e.g., in a port or ports 130, 132) for providing access to contents of the container 708. Here, items may be added to or removed from the container 708, for example by a warehouse operative. In this position, the slider 706 is spaced away from the cart 704 (this position substantially corresponds with the position of the conveyor system 500 shown in Figs. 5 and 6). In certain examples, in this position engagement means of the slider 706 are no longer underneath the storage container 708 and are biased into a raised position such that they engage a front side of the container 708 (e.g., the engagement means 652a, 652b described above).

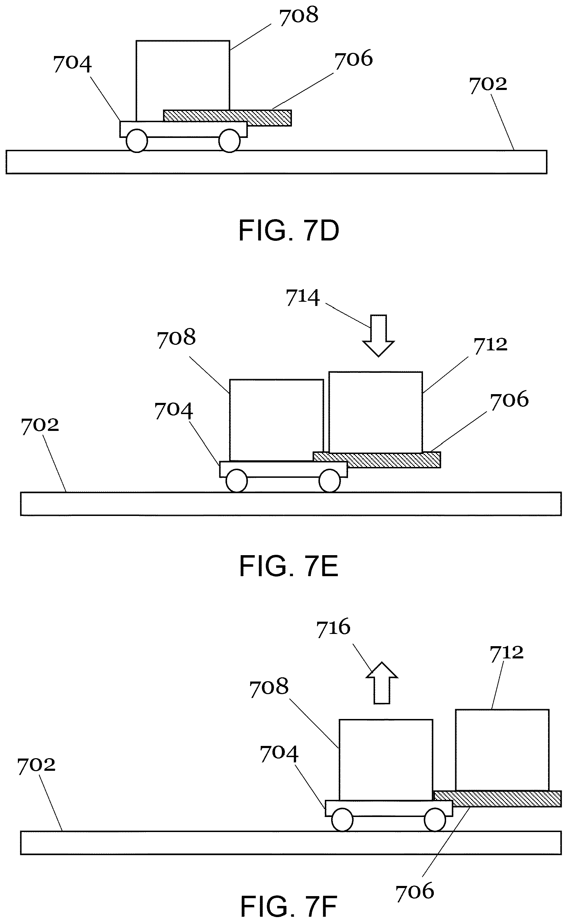

After items have been added to or removed from the container 708, the cart 704 is moved towards the opposite end of the rail 702 as shown in Fig. 7C, such that the cart 704 is at a rear of the conveyor system 700. As the cart 704 is moved along the rail 702, the slider 706 moves relative to the cart 704 such that when the cart 704 is at the rear of the conveyor system 700 the slider 706 substantially overlies the cart 704, such that there is only spaced on the slider 706 and the cart 704 for a single container 708. This movement of the cart 702 and the slider 704 shifts the container 708 from the slider 704 to the cart 702 (e.g., the slider may pushed the container over a ramped portion of retaining members of the cart as described above). For example, the container 708 may be received within a recessed portion of one or more retaining members of the cart 704. As a result, when the cart 702 moves along the rail 702 towards the front position, as shown in Fig. 7D, the container 708 does not move relative to the cart 702. However, the slider 706 moves relative to the cart 704 as the cart 704 moves along the rail 702, creating space to receive a second storage container 712.

As shown in Fig. 7E, When the cart 704 has reached the same place along the rail 702 as it was positioned in Fig. 7A, the slider 706 is once again at the bottom of a port column, and is spaced away from the cart 704 in order to receive the second storage container 712. For example, this may deposited on the slider 706 by a robot as indicated by arrow 714.

The cart 704 then moves forward to the front of the conveyor system 700, as shown in Fig. 7F (wherein the cart 704 is in the same position as shown in Fig. 7B) such that the second storage container 712 is at a picking and packing location (e.g., in a port or ports 130, 132) for providing access to contents of the container 712. In this position, the cart 704 is at the bottom of the port column, and so the first storage container 708 is able to be lifted from the cart 704 by a robot as indicated by arrow 716. For example, this may be the same robot that deposits the second storage container 712 as described with respect to Fig. 7E, for increased efficiency. After the storage container 708 has been removed from the cart 704 and picking/packing of the second storage container 712 has finished, the cart 704 moves towards the rear of the rail 702 (i.e., to the position shown in Fig. 7C). In doing so, the second storage container 712 is moved onto the cart 704 by the slider 706. The conveyor system 700 can then repeat these steps for picking/packing of different storage containers in the automated storage and retrieval system.

By being provided in this way, the conveyor system 700 can provide improved efficiency as a single robot can deposit a storage container onto the conveyor system 700 and quickly remove another storage container from the conveyor system (e.g., as described with respect to Figs. 7E, 7F). In contrast, a conveyor system with space for only a single storage container would require two robots, and/or additional time is required in waiting for the robots to drop and lift storage containers the length of the entire port column. Furthermore, a storage container can be removed from the conveyor system 700 while another storage container is being picked/packed (e.g., as shown in Fig. 7F). In addition, due to the gearing system, these benefits are achieved without the need to provide multiple carts which are controlled independently of one another, as movement of the cart 704 and the slider 706 are mechanically linked to one another as described above. This provides a simplified conveyor system which is easier to operate, cheaper to produce, and less prone to failure.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A conveyor system for a port in an automated storage and retrieval system, the conveyor system comprising:
a rail;
a cart moveable along the rail between a first position and a second position, and configured to convey a storage container;
a slider slidably mounted on the cart, and configured to move a storage container relative to the cart; and
a gearing set configured such that as the cart is moved along the rail, the slider is moved on the cart by the gearing set.

2. A conveyor system according to claim 1, wherein the gearing set is configured such that as the cart is moved along the rail by a first distance, the slider is moved on the cart by a second distance, wherein the first distance is greater than the second distance.

3. A conveyor system according to claim 2, wherein the gearing set is configured to move the slider on the cart in a predetermined ratio relative to the movement of the cart along the rail.

4. A conveyor system according to claim 2 or 3, wherein the gearing set is configured such that when the cart is moved from the first position to the second position, the slider moves by an amount at least equal to a length of a storage container in the direction of movement.

5. A conveyor system according to any preceding claim, wherein the gearing set is configured such that when the cart is in the first position the cart and the slider are arranged to retain two storage containers, and when the cart is in the second position the scart and the slider are arranged to retain a single storage container.

6. A conveyor system according to any preceding claim, wherein the gearing set comprises:
a first linear gear mounted to the rail,
a second linear gear mounted to the slider,
a cart gear which meshes with the first linear gear, and
a slider gear which meshes with the second linear gear, wherein the slider gear and the cart gear are mounted to the cart on a shared axle.

7. A conveyor system according to any preceding claim, further comprising a roller track for supporting one or more storage containers as they are transferred along the conveyor system.

8. A conveyor system according to claim 7, wherein the roller track comprises a first roller track section and a second roller track section, wherein the first roller track section comprises a weigh station for weighing a storage container supported thereon.

9. A conveyor system according to claim 7 or 8, wherein the slider comprises engagement means for pushing the second storage container along the roller track as the slider is moved.

10. A conveyor system according to claim 9, wherein the engagement means is moveable between a raised position for engaging a side of a storage container, and a lowered position.

11. A conveyor system according to claim 10, wherein the slider further comprises a biasing means for urging the engagement means towards the raised position.

12. A conveyor system according to any preceding claim, wherein the cart comprises a retaining member configured to engage a storage container, the retaining member comprising a recessed portion into which a storage container is received.

13. A conveyor system according to claim 12, wherein the retaining member comprises a ramped rim over which a storage container can be slid to be received into the recessed portion.

14. A conveyor system according to any preceding claim, further comprising an actuator system for moving the cart along the rail.

15. A conveyor system according to any preceding claim, further comprising a side barrier for constraining the position of a storage container in a direction perpendicular to a length of the rail.
